# EUROPEAN PATENT APPLICATION

(11) **EP 4 067 596 A1**
(43) Date of publication of application: **05.10.2022**
(21) Application number: 22165425.4
(22) Date of filing: 30.03.2022
(51) Int. Cl.: E04B 1/61, E04B 2/74, F16B 5/06

(54) **PROFILE SYSTEM FOR INSTALLATION IN ANGLED JOINTS OF PARTITIONS MADE FROM CLADDING PANELS**

(30) Priority: 01.04.2021 ES 202130674 U
(71) Applicant: Galbis Linero, Francisco Javier, 46010 Valencia (ES)
(72) Inventor: Galbis Linero, Francisco Javier, 46010 Valencia (ES)
(74) Representative: Sanz-Bermell Martinez, Alejandro

(57) **Abstract**

A normally metallic carpentry structure, particularly made of extruded aluminium, shaped to be installed in the angled joints of partitions or linings of walls made from one or more cladding panels.

## Description

The object of the present invention is a normally metallic carpentry structure, particularly made of extruded aluminium, shaped to be installed in the angled joints of partitions or linings of walls made from one or more cladding panels.

### State of the art

When a partition or lining is made from cladding panels, two of the walls sometimes form an angled joint, such that during the installation profiling and finishing work must be performed on the joint between the two cladding panels that form the joint. This work must be meticulous in order for the joint between the two panels to be flush.

The profile system object of the present invention provides an assembly of profiles that facilitates the installation of cladding panels at angled joints, avoids the profiling and finishing work on the lateral faces of said panels, and optionally also provides means for the installation of a lighting system, for example, an LED lighting system.

### Description of the invention

The profile system object of the present invention is intended to be installed in the angled joints of partitions or linings of walls made from one or more cladding panels.

In this description, the terms "inner" and "outer" or any other positional indication of the different elements refer to the orientation of each of the profiles once installed, the interior part being the part closest to the corner formed by the two cladding panels arranged perpendicularly or at any other angle and the outer part being the part closest to the edge formed by said cladding panels.

The profile system object of the present invention is formed by at least one inner profile and one outer profile, wherein said profiles extend longitudinally along the entire vertical of the cladding panels.

The inner profile is formed by a body, wherein each of the sides of the body is parallel to one of the cladding panels of the joint, and wherein the outer face of each of the sides of the body is in contact with the end of the inner face of one of the cladding panels; while the outer profile is formed by a body, wherein each of the sides of the body is parallel to one of the cladding panels of the joint, and wherein the inner face of each of the sides of the body is in contact with the end of the outer face of each of the cladding panels.

A set of extensions emerge from the outer faces of each of the sides of the body of the inner profile, and another set of extensions emerge from the inner faces of each of the sides of the body of outer profile, wherein the extensions of the inner profile and the outer profile comprise fastening means for fastening to each other, the fastening position being variable so that this profile system can be installed on cladding panels of different thicknesses.

Optionally, the outer profile forms a housing for a lighting element, preferably an LED strip. Said housing is susceptible to comprise fastening means for fastening a diffuser cover.

### Brief description of the drawings

To complement the present description, and for the purpose of helping to make the features of the invention more readily understandable, in accordance with a preferred practical exemplary embodiment thereof, said description is accompanied by a set of figures constituting an integral part of the same, which by way of illustration and not limitation represent the following:
Figure 1 shows a view of a cross section of the inner profile, according to an embodiment of the present invention.
Figure 2 shows a view of a cross section of the outer profile, according to an embodiment of the present invention.
Figure 3 shows a view of a cross section of the outer profile comprising a housing for a light element, according to an embodiment of the present invention.
Figure 4 shows a view of a cross section of a cover for housing the outer profile shown in Figure 3, according to an embodiment of the present invention.
Figure 5 shows a view of a cross section of the profile system assembled with cladding panels, according to an embodiment of the present invention.
Figure 6 shows a view of a cross section of the profile system assembled with cladding panels in a different position to that of Figure 5, according to an embodiment of the present invention.

### Description of preferred embodiments of the invention

In view of the mentioned figures and in accordance with the adopted numbering, a preferred exemplary embodiment of the invention may be observed therein, which comprises the parts and elements that are indicated and described in detail below.

The profile system object of the present invention is formed by at least one inner profile (1) and one outer profile (2), wherein said profiles extend longitudinally along the entire vertical of the cladding panels (4).

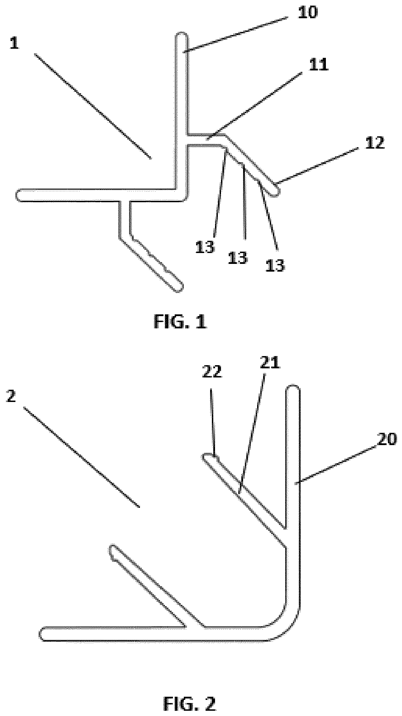

The inner profile (1), as shown in Figure 1, is formed by an "L"-shaped body (10), wherein each of the sides of the body is parallel to one of the cladding panels of the joint, and wherein the outer face of each of the sides of the body (10) is in contact with the inner face of the cladding panel (4). Two extensions (12) longitudinal and parallel to each other emerge from the outer faces of each of the sides of the body (10), each of said extensions (12) forming a 45° angle with respect to the part of the body (10) from which it emerges, said extensions (12) comprising a set of longitudinal grooves (13) on the inner faces thereof.

Each of the extensions (12) comprises a perpendicular portion (11) in the part closest to the side of the body (10) from which it emerges, such that the lateral face of the cladding panel (4) rests on this perpendicular portion (11), thus facilitating the positioning of said panel when the inner profile (1) is installed, for example, on a wall.

Furthermore, as can be seen in Figure 2, the profile system comprises an outer profile (2) formed by an "L"-shaped body (20), wherein each of the sides of the body (20) is parallel to one of the cladding panels of the joint, and wherein the angle between the two sides is rounded (it could also be right-angled), and wherein the inner face of each of the sides of the body (20) is in contact with the outer face of the cladding panel (4). Two extensions (21) longitudinal and parallel to each other emerge from the inner faces of each of the sides of the body (20), and parallel to the extensions (12) of the inner profile (1), each of said extensions (21) forming a 45° angle with respect to the part of the body (20) from which it emerges, said extensions (21) comprising at least one longitudinal rib (22) on each of the inner faces thereof.

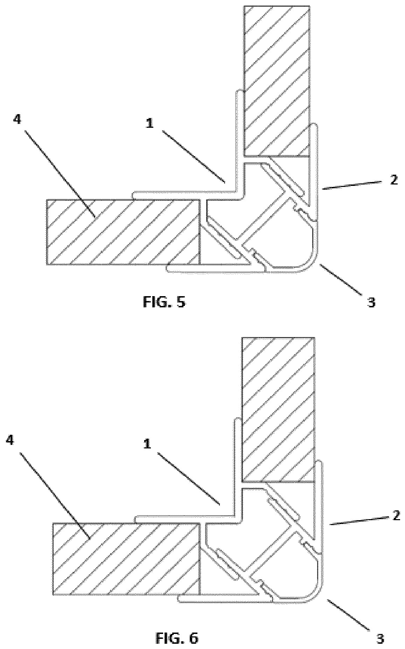

The insertion of the rib (22) in one of the grooves (13) causes the fastening of the outer profile (2) on the inner profile (1) by means of an elastic retention of the rib (22) in the groove (13). Depending on the width of the cladding panels (4), the rib (22) of the outer profile (2) is inserted into one groove (13) or another of the inner profile (1), as can be seen in Figures 5 and 6.

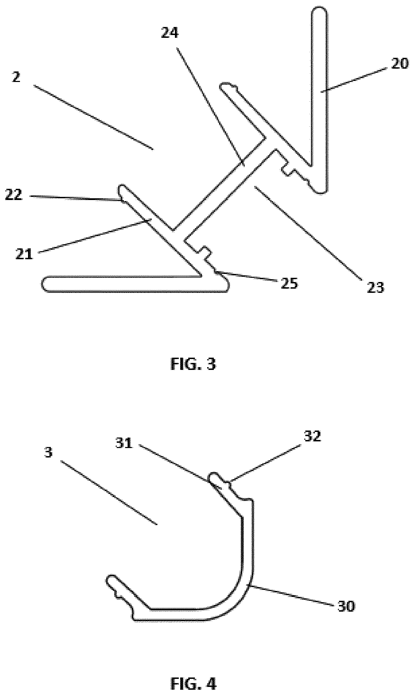

As shown in Figure 3, according to one embodiment option, the outer profile (2) forms a housing (23) for a lighting element, preferably an LED strip. The sides of the body (20) of the outer profile do not form an angle, but rather are joined through a central portion (24) arranged between the two extensions (21) and parallel thereto, and wherein each of the extensions forms a longitudinal groove (25) on the inner faces thereof.

The system further comprises in this embodiment a diffuser cover (3) formed by a body (30) of the cover (3), and said body (30) comprising two lateral extensions (31) that comprise a rib (32) on the outer faces thereof susceptible to being inserted into the groove (25) of the outer profile (2), thus fastening the diffuser cover (3) to the outer profile (2).

The housing (23) of the outer profile (2) can be arranged longitudinally along the entire height of said outer profile (2), or it can be arranged only in a portion of said outer profile (2).

## Claims

1. A profile system for installation in angled joints of partitions made from cladding panels, **characterised in that** it is formed by:
• An inner profile (1) formed by a body (10), wherein each of the sides of the body (10) is parallel to one of the cladding panels (4) of the joint, and wherein the outer face of each of the sides of the body (10) is in contact with the end of the inner face of one of the cladding panels (4);
• An outer profile (2) formed by a body (20), wherein each of the sides of the body (20) is parallel to one of the cladding panels (4) of the joint, and wherein the inner face of each of the sides of the body (20) is in contact with the end of the outer face of one of the cladding panels (4);
wherein a set of extensions (12) emerge from the outer faces of each of the sides of the body (10) of the inner profile (1), and another set of extensions (21) emerge from the inner faces of each of the sides of the body (20) of the outer profile (2), wherein the extensions of the inner profile and the outer profile comprise fastening means for fastening to each other, the fastening position between the inner (1) and outer (2) profiles being variable.

2. The profile system, according to claim 1, **characterised in that** the outer profile (2) comprises a housing (23) for a lighting element, preferably an LED strip.

3. The profile system, according to any of claims 1 or 2, **characterised in that** the inner profile (1) is formed by an "L"-shaped body (10), wherein two extensions (12) longitudinal and parallel to each other emerge from the outer faces of each of the sides of the body (10), each of said extensions (12) forming a 45° angle with respect to the part of the body (10) from which it emerges, said extensions (12) comprising a set of longitudinal grooves (13) on the inner faces thereof.

4. The profile system, according to claim 3, **characterised in that** each of the extensions (12) of the inner profile (1) comprises a perpendicular portion (11) in the part closest to the side of the body (10) from which it emerges, such that the end of the cladding panel (4) rests on this perpendicular portion (11).

5. The profile system, according to any of claims 3 or 4, **characterised in that** the outer profile (2) is formed by a body (20) that comprises two sides; wherein two extensions (21) longitudinal and parallel to each other emerge from the inner faces of each of the sides of the body (20), and parallel to the extensions (12) of the inner profile (1), each of said extensions (21) forming a 45° angle with respect to the part of the body (20) from which it emerges, said extensions (21) comprising at least one longitudinal rib (22) on each of its inner faces.

6. The profile system, according to claim 5, **characterised in that** the body (20) of the outer profile (2) is "L"-shaped, wherein the angle between the two sides is rounded.

7. The profile system, according to claim 5, **characterised in that** the body (20) of the outer profile (2) is "L"-shaped, wherein the angle between the two sides is right-angled.

8. The profile system, according to any of claims 6 or 7, **characterised in that** the outer profile (2) comprises a housing in a portion thereof, wherein said housing (23) comprises a central portion (24) arranged between the two extensions (21) of the outer body (2) parallel thereto, and wherein each of the extensions (21) forms a longitudinal groove (25) on the inner faces thereof.

9. The profile system, according to claim 5, **characterised in that** the outer profile (2) comprises a longitudinal housing (23) for a lighting element, preferably an LED strip, wherein said housing extends longitudinally along the entire height of the outer profile (2), said housing comprising a central portion (24) arranged between the two extensions (21) of the outer body (2) and parallel thereto, and wherein each of the extensions (21) forms a longitudinal groove (25) on the inner faces thereof.

10. The profile system, according to any of claims 8 or 9, **characterised in that** it comprises a diffuser cover (3) formed by a body (30) of the cover (3), and said body (30) comprising two lateral extensions (31) that comprise a rib (32) on the outer faces thereof susceptible to being inserted into the groove (25) of the outer profile (2), thus fastening the diffuser cover (3) to the outer profile (2).
